# EUROPEAN PATENT APPLICATION

(11) **EP 1 022 580 A2**
(43) Date of publication of application: **26.07.2000**
(21) Application number: 00830037.8
(22) Date of filing: 21.01.2000
(51) Int. Cl.: G01S 13/91, G01S 13/86, G01S 13/76, G01S 7/06

(54) **Landing assistance system**

(30) Priority: 21.01.1999 IT RM990037
(71) Applicant: Associazione Vito Volterra, 00133 Roma (IT); Ital Act S.r.l., 00199 Rome (IT)
(72) Inventor: Galati, Gaspare, 00162 Rome (IT); Mosciatti, Sergio, 00040 Ardea (IT); Naldi, Maurizio, 00181 Rome (IT); Nucci, Giorgio, 00161 Rome (IT)
(74) Representative: Tonon, Gilberto

(57) **Abstract**

A system for detecting, localizing, guiding and in general to assist, in the phases of approach and landing, aircrafts - with particular reference to the landing with satellite navigation - using as a sensor a secondary surveillance radar integrated with receiving stations and, in the embodiment having greater complexity and cost, a short range primary surveillance radar and, as a means for completing a function of the system, a subsystem for the processing of radar signals and of the radar data for individuating a displacement from the safe path and means for the transmission to ground and on board and of display to the pilot for the performance of corrective actions.

## Description

The present invention relates to a flight assistance system directed to the approach and landing phase of aircrafts, with particular reference to the civilian aviation and to the procedures, identified as "precision procedures", in which the navigation signals provide both the horizontal guidance and the vertical guidance, procedures which are different from the "non-precision" approach with a only horizontal guidance.

The precision approach and landing is a particular critical phase in terms of safety and requires the use of a precision navigation system that allows the localization of the aircraft with respect to an optimal descent path; thanks to such system the pilot (possibly assisted by the automatic pilot) may detect and correct the displacement from the prefixed path. In the present status of art the localization system, known as ILS - Instrument Landing System - is based on radiowave beams modulated with pairs of different frequencies emitted by suitable transmitters at the ground with the pertaining antennas, the points of equal modulation depth of each pair individuate the approach at the landing path. The relative high costs for the installation and management of the ILS and the development of the global satellite navigation (based on the GPS system of the USA, and Glonass, of Russia) have pushed several administrations to developed and try systems for approach and landing based on satellite navigation. The unavoidable malfunctioning of the satellites, the propagation phenomena (in particular the block of the radioelectric signals caused by mountains or other obstacles) and the possible radioelectric interference on the frequencies of the GPS and Glonass systems, which irradiate signals whose power level at the ground is very low (see, among other the paper
[1] "GPS susceptibility to RF interference" by H. Oman, published on IEEE AES System Magazine, March 1998, page 1)
   Make necessary, as it is universally recognized, augmentation systems and integrity systems of the satellites themselves. Such systems, complex and costly, are being developed in the United States, with the name of WAAS, and in Europe with the name of EGNOS; however also in the same United States there are doubts that they may be capable of guaranteeing the requirements of precision, service continuity and integrity, in the sense of a prompt and secure signaling of possible malfunctions, and even if not directly bound to the safety like the first three, of availability of the service (see in this respect, among other, the paper
[2] "Satellites lose support" published on Jane's Airport Review of October 1998, pages 23 and 24)
   The aim of the present invention is the one of providing a guidance system and method for aircraft in the phase of approach and landing that allows the safe and timely performance of such phases also in the case of malfunctioning of the satellite navigation system; the term malfunction is here meant in the broad sense of situations, even if temporary, in which the signal produced by the satellite navigation system are out of the tolerances. The system object of the present invention operates as a backup of the satellite system: thanks to it there are satisfied the requirements of continuity of the service, with the necessary precision and with the integrity control, with an efficiency increase (this latter may be evaluated with the likelihood of a missed landing).
   The present invention is based on the innovative use of the signals transmitted by an apparatus present on board of all the aircraft of the commercial aviation and all the airplanes (both of the commercial aviation and of the aviation in general) which operate according to the regulations of the instrument flight: it is the transponder of the secondary surveillance radar, in brief SSR.
   The state of the art before the present invention foresees, in at least one case, the use of passive stations, which receive the signals of the SSR transponder for the localization of the aircrafts, and there is also a commercial system for landing based on such principle (see the paper
[3] "GPS approaches augmented by the Transponder Landing System" di J.R. Stolz, published on the magazine GPS Solution, march 1995, and
[4] the brochure of the Transponder Landing System commercialized by Advanced Navigation and Positioning Corporation, P.O. Box 838, Hood River, Oregon 97031 USA, Fax + 503 386 2124).
   However the solution of the statue of the art according to the present invention, not using the high precision radar foreseen in the present invention, entails a high number of passive stations (seven in the system Transponder Landing System proposed by Advanced Navigation and Positioning Corporation) with an appreciable increase of burden due to the complexity and the cost, in particular for the installation and the management.
   The present invention overcomes the above described limitations by the combined use of a high precision radar and of passive stations, and with this method the aircraft in the phase of approach and landing is localized; possible displacements with respect to the foreseen path are detected and communicated aboard by means of a dedicated channel, to be realized with techniques well known to the persons skilled in the art to which is directed the present invention. For the aircrafts which are provided with a standard base equipment, the more convenient technique of transmission aboard, preferred in the present invention, uses the VHF and UHF channels of a ILS transmitter (Instrument Landing System) and respectively for the horizontal deviation (localizer) and vertical (Glide Slope), maintaining in this way the present avionics installation and the usual display for the pilot, while for aircraft with a more evolved equipment the present invention foresees the digital transmission using the channel of band L (around 1030 MHz) of the SSR Mode S or the channel in the VHF band (Very High Frequency, from 118 to 136 MHz) of the VDL (VHF Data Link), with the possibility of a direct interaction with the computerized system for the flight management.
   Specifically, the new technology according to the present invention uses a high precision surveillance radar, preferably of the kind, "secondary radar", located near the landing strip and a suitable number, very small in the preferred embodiments of the invention, of station provided with a SSR receiver, in the following briefly indicated as passive stations.
   From the receiver oh the SSR and from the passive station there are produced measurements of the time elapsed between the interrogation and the response emitted by the transponder at the standard frequency of 1090 MHz (in the following the product of such time by one half of the speed of the light is indicated with the term of pseudo-distance or pseudorange: it does not coincide with the distance of the aircraft because of the fixed delay of the transponder). Such measurements are processed together with high precision angular measurement provided by the SSR with an elimination of the system errors, the first of these being the delay of the transponder, and a minimization of the effects of random errors. The processing is based on the principle of the least squares, well known to persons skilled in the art. A primary radar already present in the area of the airport or near it may also be utilized, in the field of the present invention, in combination with the secondary radar or also alone; in this latter case the responses of the transponder that are utilized are the spontaneous ones, well known to the experts and identified as "squitter".
   The present invention is now disclosed with reference to presently preferred embodiments thereof, referred to as an illustrative and non limitative example.
   1. The aim of the present invention, with reference to the techniques and the principles above described, is a system constituted of:
   2. A main station provided with a surveillance radar for the localization of the aircraft in the approach and landing phase; in the realization at a lower cost, the radar is of the "secondary" type with the capability of providing the localization parameters, namely the azimuth and the pseudorange and in such realization, as also in the other, hereafter disclosed, the high precision in the measurement of the azimuth is obtained by means of a suitable processing of the sequence of the responses or "replies" of the transponder, as it is disclosed in the paper
[5] G. Galati, F.A. Studer: "Maximum likelihood azimuth estimation applied to SSR/IFF systems", IEEE Transactions on Aerospace and Electronic System, Vol. 26, n° 1, January 1990, pages 27-43;
   in the medium cost and greater precision realization it has also the capability of measurement of the elevation angle of the aircraft using the techniques well known to persons skilled in radar systems (see, for instance, the volume:
[6] M.I. Skolnik, "Introduction to radar systems" M. Graw Hill - Second Edition, 1980, at pages 542 and 543)
   called "monopulse" or "V-beam", the greater quantity of information provided by the reader allows a reduction of the number of passive stations, (that conceptually may be limited to one, but in practice depending on the constraints of installation and of the precision - or category - of instrument landing that is required) and therefor a more easy installation. In a third, higher cost modification, the measurement of pseudorange is transformed in a measurement of distance by means of the calibration of the delay of the transponder by means and primary radar located in the same position, that may be used for the traffic control in the area surrounding the airport. Also for this version there is a further reduction of the number of passive stations, that in principle could be brought to zero, but in practice depending on the constraints of installation and of the precision - or category - of instrument landing required. The constancy of the descent angle of the aircraft (fixed at a value of about 3° and up to 5,5° in mountain areas) is utilized, in the present invention, for applying techniques of measurement of the elevation angle (identified as "monopulse" and "V-beam") also in the presence of reflection of the electromagnetic waves on the terrain or on the sea, which are particularly harmful (as it is remarked by M. I. Skolnik on page 543 of his book above mentioned, rif. [6]) for aircrafts under a low elevation angle as it is the case of the present invention, but, in the present invention, neutralized by means of a suitable selection of the height of the antenna of the radar, in order to put in phase the direct signal with the reflected signal, and by means of a calibration of the measurement of the elevation angle to the change of the distance of the aircraft.

In situation in which the aircrafts are equipped with the transponder of mode S, which constitutes the present standard and that in time substitutes the transponders of the previous generation (mode A/C) to the obtained measurements when the aircraft is in the main beam of the radar antenna there are added those which are obtained in a passive way, i.e., receiving the "replies" emitted spontaneously by the transponder (and defined as "squitter") at repeating intervals. Such technique, already known in the state of the art before the present invention, allows with a very low burden, in the field of the present invention, to increase the number of localizations of the aircraft for unit of time; for such purpose the secondary radar that constitutes part of the present invention may operate, in an embodiment thereof, also as a passive station by means of the omnidirectional antenna that is usually used, at is known, for the suppression of undesired signals coming from the lateral lobes; in such way the localization of the aircraft is possible, by means of the main station and the passive ones, also when it is not in the main lobe of the antenna of the radar, with an improvement of the rate of updating of the data. By using a primary radar in place of the secondary one, the "squitters" constitutes the sole "replies" used for the localization of the aircraft.

2. A set of passive station installed near the airport in positions, with respect to the landing strip, suitably optimized for minimizing the geometrical dilution factor of the precision. Each station is provided with a receiver of the "replies" that allows the measurement of the arrival time of each "reply". Such measurement may be made, according to two possible, and functionally equivalent, embodiments of the present invention, to be used according to the operative environment, or locally, therefor in the station itself provided with a precise clock (servoed to the one of the main station by means and radio or cable connection from the main station to the passive station), or near the processing center located preferably near the main station; in this second embodiment the "replies" are simply transmitted, on a radio channel or on an optical fiber, at the processing center, where the time measurement is performed.

3. A processing and control center, in which as a first step the time measurements and the angular measurements, i.e. of azimuth or of azimuth and elevation are combined, according to methods well known to the experts, for estimating in a optimal way the position of the aircraft; as a second step, the sequence of positions obtained each in correspondence with a "reply" emitted by the aircraft, and is provided in input to a filtering and prediction algorithm according to "tracking" methods well known to persons skilled in the art; as a third step, the displacement of the aircraft with respect to the correct descent path, both in respect of the estimated position and the foreseen one, are compared with the tolerances considered by international standard; as a fourth step, in case of trespassing of the tolerances, there is produced an alarm signal with the transmission on board of the aircraft and an indication of the value of the undesired displacements, and, in the case of a suitable equipped aircraft, with the sending on board of the necessary correction maneuvers.

4. A subsystem for point-to-point communications that is connected, with techniques well known to persons skilled in the art, with the passive station and the main station with the processing and the control center.

5. A radio-communication subsystem that connects, with technique well known to persons skilled in the art the processing and control center with the aircraft.

6. A subsystem for receiving and displaying on board of the aircraft of the alarms for deviation from the path of approach, of the displacement that have been detected and, if the aircraft is suitably equipped of the necessary correction actions. Such subsystem may be realized with techniques well known to the persons skilled in the art, among which there is the use of the radio channel and the display of the present instrument landing system identified as ILS.

The present invention will be now disclosed in a non limitative way with reference to presently preferred embodiment thereof disclosed on the basis of the figures of the attached drawings; the figures attached to the present specification are the following:

figure 1: a schematic diagram of the system for landing assistance, object of the present invention.

Figure 2: a schematic diagram of the main station, which constitutes a part of the present invention.

Figure 3: a schematic diagram of one of the passive stations, all equal each other, which constitute a part of the present invention.

Figure 4: a schematic diagram of the processing center, which constitutes a part of the present invention.

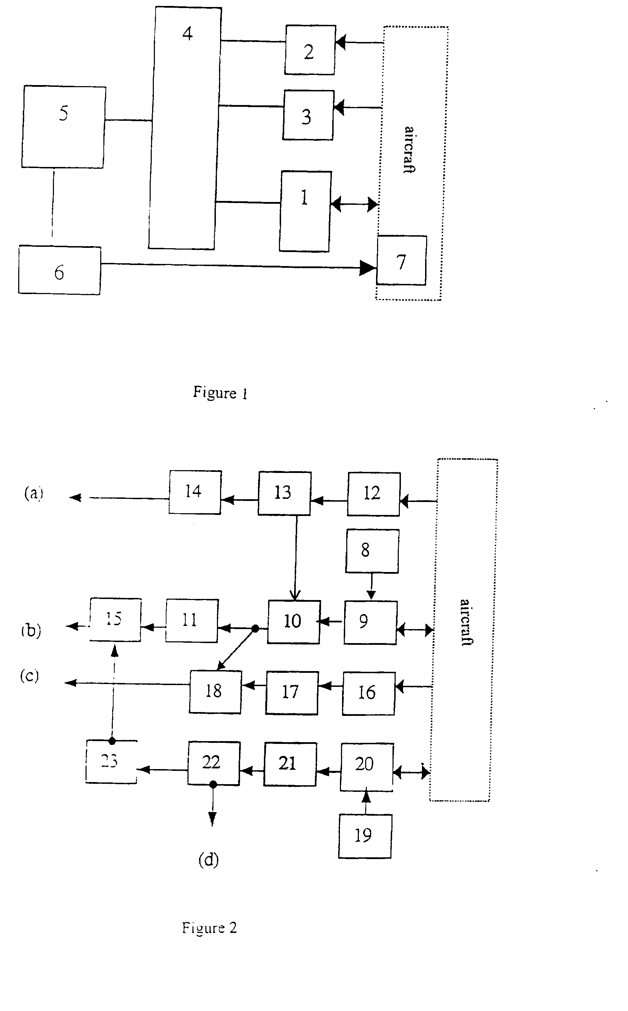

In particular, figure 1 is a general schematic diagram of the invention. In this figure, the block one indicates the main station, provided with a surveillance radar for the localization of the aircraft in the phase of approach and landing; the radar co-operates with the aircraft interrogating its transponder and receiving the "replies" and, in the higher cost embodiment, transmitting pulses and receiving the echoes from the aircraft itself; the blocks 2 and 3 indicate two passive stations, capable of receiving the "replies" coming from the transponder aboard, the number of two stations being simply indicative and selected in order to be able to show the invention by means of a possible embodiment thereof; the block 4 indicates the point-to-point communication system - that can be realized with techniques well known to persons skilled in the art - that connects the main station and the passive stations with the processing and control center in order to transfer to said center, in a possible embodiment of the invention, the replies, or, in an equivalent manner, in another possible embodiment of the invention, the data of the arrival time and of the code data (the code providing the identity and barometer height of the aircraft), obtained from the replies themselves in a manner well known to the experts in the field and necessary for the localization of the aircraft; the block 5 indicates the processing and control center in which the "replies" or in an equivalent manner the time of arrival and code information coming from the passive stations are combined with the information of localization and code derived from the radar in order to determine the position of the aircraft with the precision and the reliability necessary and for predisposing the messages of alarm and correction for the aircraft; the block 6 indicates the radio-communication system - that can be realized with techniques well known to persons skilled in the art - that connects the processing and control center with the aircraft in order to transmit to it the alarm signals and the possible correction maneuvers and then the block 7 indicates the display system of the alarms of end of the possible correction maneuvers on board of the aircraft; this latter block may be realized in a known way by means of the usual subsystem for processing and display, for instance the display of "horizontal situation" and of "vertical situation", briefly HSD and VSD, or by means of the simple and widespread display of the ILS instrument landing system.

In the following there are disclosed the parts of the invention not known in the prior art preceding the present invention, and namely blocks 1, 2 (the block 3 is identical to the block 2) and 5.

Figure 2 shows the schematic diagram of an embodiment of the main station, which constitutes a part of the present invention. In it, the block 8 indicates the transmitter of the secondary radar, which emits the interrogation signals that through the antenna and the associated duplexer, block 9, are sent to the aircraft, which retransmits the "replies" that are received by the same antenna and sent to the block 10, receiver of the "sum" channel, and to the block 16, "difference" channel of the antenna and from it to the block 17, "difference" receiver being the block 16 and 17 necessary for the "monopulse" function in elevation; in another embodiment, the "monopulse" function and the blocks 16 and 17 are not present. The output of the block 10 is sent together with the output of the block 17 - if present -, to the block 18, where the measurement of the azimuth angle (or briefly azimuth) measurement of the aircraft is performed and, if considered, the one of the elevation angle; such measurement being then transmitted to the control and processing center through the point-to-point communication system, item (c) in the present figure 2. Concurrently, a know directive antenna, block 12, receives the spontaneous "replies" ("squitter") and, through a receiver, block 13, sends them to the measurement of the arrival time, block 14; said measurements are sent to the control and processing system through the point-to-point communication system, item (a) in figure 2. The block 13 performs also the usual function of suppression of the replies coming from the lateral lobes, typical of the secondary surveillance radar, sending the received signal to the block 10. The signal at the output of the block 10 is sent to the block 11 where the measurement of the arrival time of the "replies" is performed, which, after the possible correction of the delay caused by the transponder, performed by the block 23 in an embodiment of the present invention, is transmitted with known techniques, to the processing and control center through the point-to-point communication system, item (b) of the present figure 2. Said correction of the time of arrival of the "replies" is performed thanks to the primary radar present an embodiment of the present invention, said radar including, according to the state of the art well known to the persons skilled in the art, a transmitter, block 19, that sends a high power signal, through a antenna-duplexer assembly, block 20, towards the target constituted of the aircraft and produces a low power echo signal, that, received by the antenna and passing through the duplexer (block 20) is sent to a receiver, block 21, and from it to the measurement of the distance, according to well known techniques, these measures being sent to the block 15 that allows the calibration of the delay caused by the transponder.

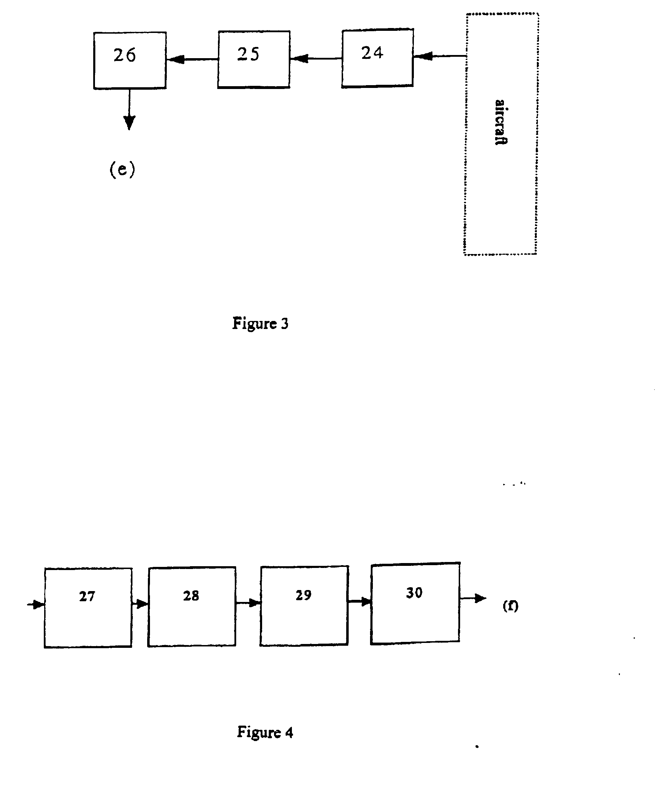

Figure 3 shows the schematic diagram of one of the passive station, all equal each other, which constitute a part of the present invention; in these, block 24 represents the antenna that receives the "replies" emitted by the transponder of the aircraft: it is a directional antenna which covers the approach and landing areas and that can be built with well known techniques; the block 25 represents the receiver of said "replies" and also this may be realized with well known techniques, and then the block 26 represents the sub-assembly for the measurement of the arrival time of the "replies", and includes a decoder of the same and an accurate clock, both that can be realized with well known techniques; in a different embodiment of the invention, block 26 is a sub-assembly for the modulation of the "replies" themselves for their transmission to the processing and control center by means the subsystem of point-to-point communication (direction (e) of figure 3), with well known techniques.

Figure 4 shows the schematic diagram of an embodiment of the processing center, which constitutes a part of the present invention. In this figure, the block 27 represents the part which realizes the reception - through the fixed communication system, block 4 of figure 1 - of the signals according to items (a), (b), (c), (d), (e) of figure 2 and 3. Said signals are indicating the localization, because they contain the arrival time of the "replies" - or, in a possible embodiment, the "reply" themselves - and moreover, coming from the main station, the angular localization data. The block 28 represents the function of estimate of the position on the basis of the information arrived in this way, obtained, in the present invention, by combining such information as it will be disclosed hereinafter. On the basis of the measurement of the azimuth angle provided by the main station the equation of the circle is written, pertaining to the vertical plane passing through the center of the radar antenna of the station and through the measured azimuth direction; on the basis of the measurements of the arrival times of the "replies", the difference are calculated of the pair of the measurement of time of arrival of the "replies" individuating at least two revolution hyperboloids that intersect said plane generating at least two conics, the intersection of the conics individuating the estimated position of the aircraft. In the case in which the main station has also the capability of measurement of the elevation angle of the aircraft, it is sufficient a single hyperboloid that, intersected whit the abovesaid plane, individuates a conic wherefrom it is determined the intersection with the straight line pertaining to the plane, passing through the center of the radar antenna of the main station and inclined with respect to the horizontal by the found angle of elevation. In the case in which the landing procedures require a particularly high precision the present invention uses a number of measurement higher than the minimum and determines the position of the aircraft with the criterion of the minimization of the average square error, well known to the experts in the field. In the block 29 said position of the aircraft is compared with the locus of the safe positions, named also "RNP Tunnel"; in a preferred embodiment the comparison is made both in respect of what concerns the present situation and also for the future situation, estimated by means of the known techniques of extrapolation in the field of the processing of the radar data. In the block 30 there occurs the generation of possible alarms, which occurs if the position of the aircraft results external to the locus of safe points, and of the correction maneuvers which are calculated for the aircraft equipped to receive them. Alarms and corrective maneuvers, indicated with the symbol (f) in figure 4, are sent to the aircraft through the radio-communication system, block 6 of figure 1.

The embodiments may be modified with respect to what has been disclosed and shown, without departing from the scope of the present invention, as defined by the following claims.

## Claims

1. A system for detecting, localizing, guiding and in general to assist, in the phases of approach and landing, aircrafts (7), with particular reference to the landing with satellite navigation, characterized in that it uses as sensor a surveillance radar making part of a main detection station (1), an in which a processing, by the main station, of the sequence of signals coming from the aircraft allows a high precision of the measurement of the azimuth (angular detection) of the aircraft.

2. A system according to claim 1, characterized in that the main station uses a secondary surveillance radar for the detection of the aircraft.

3. A system according to claims 1 and 2, characterized in that the secondary radar has the capability of measurement of the elevation angle of the target by means of a comparison of the signals coming from two antenna beams.

4. A system according to the claims 1, 2 and 3, characterized in that the secondary radar is provided with a further non directional type antenna - a pertaining receiving channel - with which a "reply" signal emitted spontaneously by the aircraft are received also when the aircraft is not in the main lobe of the directional antenna, in order to measure the time of arrival of said signals.

5. A system according to the claims 1, 2, 3 and 4, characterized in that the main station includes a radar of the primary kind, capable of measuring the distance of the aircraft without the error caused by the emission delay of the "replies", and a correction circuit for said delay for the "replies" received by the secondary radar based on said measurement by the primary radar.

6. A system according to the claims 1, 2, 3, 4 and 5, characterized in that the primary radar according to the preceding claims performs the function of localization of the aircraft both in range and in azimuth, with high precision.

7. A system according to the claims 1, 2, 3, 4 and 5, characterized in that it comprises a set of passive stations; each of said stations being provided with an antenna which receives the "replies" emitted by the aircraft as a consequence of interrogation by a secondary radar, or also spontaneously; the receiver connected to said antenna allowing the measurement of the time of arrival of each "reply"; the stations, all operatively equal, being installed near the airport in suitably selected positions, with respect to the landing strip.

8. A system, according to the claims 1 to 7, characterized in that it comprises a processing and control center in which, through a point-to-point communication system, are conveyed the measurement coming from the main station and from the passive stations and constituted by the arrival times of the "replies" and from the angle and distance measurements coming from the secondary radar.

9. A system according to claims 1 to 8, characterized in that said measurements are combined together in order to localize the aircraft during his approach and landing path with high precision.

10. A system according to claims 1 to 9, characterized in that in order to combine together said measurement in order to localize the aircraft there is used the least minimum squares method, obtaining the estimated position of said aircraft.

11. A system according to claims 1 to 10, characterized in that the estimated positions in subsequent times are processed for obtaining the foreseen position.

12. A system according to claims 1 to 11, characterized in that the estimated position and the foreseen position are compared with the set of the safe position for generating an alarm when the aircraft is deviating from the normal descent path.

13. A system according to claims 1 to 12, characterized in that the estimated position and the predicted one are compared with the whole of the save position for generating the necessary correction maneuvers, when the aircraft is deviating from the regular descent path.

14. A system according to claims 1 to 13, characterized in that the alarm due to the displacement from the estimated or the foreseen position - or both - from the safe path is sent to the aircraft by means of a radio-communication system and displayed to the pilot by means of a display located on board.

15. A system according to claims 1 to 14, characterized in that the correction maneuver of the shift from the safe path are sent to the aircraft by means of a radio-communication system and displayed to the pilot by means of a display present on board.

16. A system according to claims 1 to 15, characterized in that in one embodiment the passive stations transmit to the processing and control center the "replies", and in that the measurement of the arrival time of said replies is performed in said processing and control center.

17. A system according to claims 1 to 16, characterized in that in an embodiment the passive stations are absent because the capability of localization by the main station in respect of distance, azimuth angle and elevation angle are adequate for the monitoring of the aircraft in its descent path and to the generation of said alarms and of said correction maneuvers.

18. A system according to claims 1 to 17, characterized in that it is used for integrating the satellite navigation with respect to the approach and landing, guaranteeing the precision, continuity, integrity and availability required by the international regulations and reducing the number of missed landings.
